# EUROPEAN PATENT APPLICATION

(11) **EP 1 076 334 A1**
(43) Date of publication of application: **14.02.2001**
(21) Application number: 00117014.1
(22) Date of filing: 08.08.2000
(51) Int. Cl.: G11B 7/24

(54) **Optical recording medium**

(30) Priority: 13.08.1999 JP 22931799
(71) Applicant: SONY CORPORATION, Tokyo (JP)
(72) Inventor: Akimori, Toshihiro, c/o Sony Corporation, Shinagawa-ku, Tokyo (JP); Suwabe, Masatsugu, c/o Sony Corporation, Shinagawa-ku, Tokyo (JP); Sakamoto, Susumu, c/o Sony Corporation, Shinagawa-ku, Tokyo (JP)
(74) Representative: MÜLLER & HOFFMANN Patentanwälte

(57) **Abstract**

The present invention provides an optical recording medium including as a recording layer an organic pigment film containing an organic pigment. The organic pigment film contains as the organic pigment at least a compound exhibiting a heat generating reaction. This enables to realize a stable recording even with a low-power laser beam while maintaining a high reflection factor of the recording layer.

## Description

### Background of the Invention

### Field of the Invention

The present invention relates to an optical recording medium and in particular, to an optical recording medium including a recording layer formed from an organic pigment.

### Description of the Related Arts

Recently, research has been made for a disc-shaped optical recording medium (hereinafter, referred to as an optical disc) capable of recording a large amount of information.

Research is made not only for a reproduction-dedicated information recording medium but also for an information recording medium capable of recording and reproduction by the user. As an optical recording medium to which an information can be recorded by the user, a writable optical recording medium has been developed having a recording layer formed from a light-absorbing type organic pigment and capable of writing once. Its standardization is now discussed.

When recording an information on an optical recording medium having a recording layer formed from such an organic pigment, the recording is performed in a so-called heat mode. A laser beam is applied onto the recording layer and an organic pigment portion subjected to the laser beam absorbs the laser beam and is heated. This heat dissolves and deforms the organic pigment. The portion where the organic pigment is dissolved has a reflection factor different from the other portion of the recording layer. Thus, a pit is formed in the recording layer.

Moreover, when reading an information from this optical recording medium, a laser beam weaker than that used for recording is applied and reading is performed by detecting an optical change such as a reflection factor and a permeability between a portion where a pit is formed and a portion where is not formed.

In the aforementioned optical recording medium having a recording layer formed from an organic pigment, especially important characteristics are the reflection factor characteristic and the recording sensitivity characteristic of the recording layer. There is a close interrelationship between the reflection factor characteristic and the recording sensitivity characteristic and this greatly affects the recording characteristic of the optical recording medium.

As has been described above, in the process of recording an information on a recording layer formed from an organic pigment, the mechanism for storing heat in the recording layer. The heat required for dissolving the organic pigment in the recording layer depends on the light absorbing characteristic of the organic pigment. That is, the heat applied to the recording layer by the laser beam is determined by the laser power and the light absorption spectrum of the organic pigment in the recording layer.

In the recording sensitivity characteristic of the optical recording medium, assuming that the optical recording medium is operated within a wide range of drive, and considering the laser deterioration, it is necessary to maintain a recording sensitivity sufficient if the laser power is below an appropriate value. Conventionally, when selecting an organic pigment to constitute the recording layer, consideration is taken on its light absorption characteristic so as to maintain a sufficient recording sensitivity even in recording with a laser power below an appropriate value.

Furthermore, the organic pigment constituting the recording layer should have a high reflection factor and a high sensitivity. For this, a spot light is put on a phthalocyanine pigment and cyanine pigment having comparatively high reflection factors among the organic pigments. The cyanine pigment is especially hopeful as a recording layer material for it exhibits a high absorption and reflection in a range 700 nm to 900 nm which is the semiconductor laser light wavelength range.

However, in the optical recording medium having a recording layer formed from a cyanine pigment, absorption is reduced when the wavelength indicating the maximum reflection factor is matched with the recording laser wavelength. On the contrary, the reflection factor is reduced when the wavelength indicating the maximum absorption ratio is matched with recording laser wavelength. Thus, in the optical recording medium having a recording medium formed from a cyanine pigment, it is impossible to simultaneously obtain appropriate reflection factor and absorption characteristic and it is difficult to obtain a stable recording with a low-power laser light.

In order to solve this problem, the conventionally used method is to increase the light absorption characteristic of the recording layer within a range of 700 nm to 900 nm. More specifically, the light absorption characteristic of the recording layer is increased by increasing the absorption wavelength peak within the aforementioned range or by using a recording laser beam having a wavelength range wherein an organic pigment exhibits the maximum absorption.

According to the aforementioned method for increasing the light absorption characteristic of the recording layer, it is possible to enlarge the recording enabled power range into the low power side, but the reflection factor is lowered while the light absorption characteristic of the recording layer is increased. On the contrary, when the reflection factor is increased, the light absorption ratio is lowered. Thus, it has been difficult to obtain a stable recording with an appropriate laser power. In order to form a stable recording mark to realize a stable recording, it is important to obtain a stable heat supply.

### Summary of the Invention

It is therefore an object of the present invention to provide an optical recording medium capable of a stable recording with a low-power laser beam while maintaining a high reflection factor of a recording layer.

The optical recording medium according to the present invention includes a recording layer formed by an organic pigment film containing an organic pigment, a reflection layer, and a protection layer which are successively formed on a disc substrate, wherein the organic pigment film contains as the pigment a compound exhibiting a heat generating reaction.

In the optical recording medium having the aforementioned configuration according to the present invention, the organic pigment film contains as an organic pigment a compound exhibiting a heat generating reaction. The heat generated at a chemical reaction of the compound is supplied to the recording layer and accordingly, it is possible to realize a stable recording even with a low-power laser beam.

### Brief Description of the Drawings

Fig. 1 is a cross sectional view of a configuration example of an optical disc according to the present invention.
Fig. 2 shows a relationship between the content of the compound (1) in a recording layer and the appropriate recording power value used in Example 1.
Fig. 3 shows a relationship between the content of the compound (2) in a recording layer and the appropriate recording power value used in Example 2.

### Description of Preferred Embodiments

Description will now be directed to a preferred embodiment of the present invention.

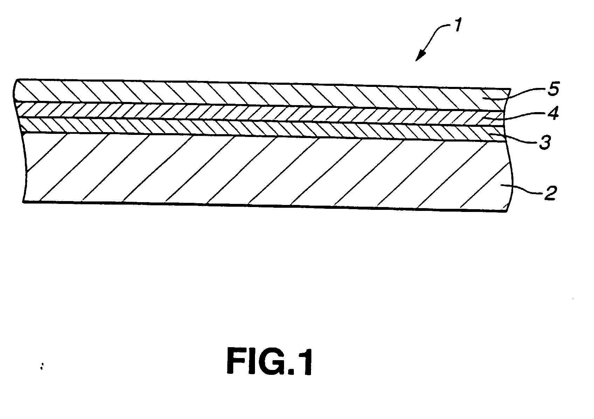

Fig. 1 is a cross sectional view of a configuration example of an optical disc according to the present invention. This optical disc 1 includes a disc-shaped substrate 2, a recording layer 3 formed on one surface of the substrate 2, a reflection layer 4 formed on the recording layer 3, and a protection layer 5 formed on the reflection layer 4.

The substrate 2 is formed from a glass or a resin optically transparent to a recording laser beam or a reproduction laser beam.

The recording layer 3 contains an organic pigment. According to the present invention, as will be detailed later, the recording layer is formed from an organic pigment which generates a heat when dissolved.

The reflection layer 4 is formed using a thin film formation technique including sputtering of a metal such as Au and Ag.

The protection layer 5 is formed from an ultraviolet ray hardening resin or the like.

When recording an information on the optical disc 1 having the aforementioned configuration, a laser beam is applied from the side of the substrate 2 to the recording layer 3 and the organic pigment portion subjected to the laser beam absorbs the laser beam and has a heat. This heat dissolves and deforms the organic pigment subjected to the laser beam. The portion where the organic pigment has been dissolved has a reflection factor different from the other portion. Thus, a pit is formed in the recording layer 3.

As has been described above, in order to form a pit by applying a laser beam to the recording layer 3 containing an organic pigment, the laser used should have a power above a certain value. In order to enable recording using a low-power laser beam, the recording layer 3 should have a high light absorption ratio.

However, the absorption characteristic and the reflection factor characteristic as the important characteristics of the recording layer 3 are incompatible with each other. When the light absorption ratio of the recording layer 3 is increased, the light reflection ratio of the recording layer is lowered. Thus, it is impossible to simultaneously obtain an appropriate reflection factor characteristic and an appropriate absorption characteristic and it has been difficult to realize a stable recording with a low-power laser beam.

In order to solve this problem, according to the present invention, the recording layer 3 contains an organic pigment whose decomposition reaction is a heat generating reaction. By using a pigment which generates a heat at decomposition as an organic pigment to constitute the recording layer 3, even when a low-power laser beam is used, the quantity of heat insufficient for recording can be compensated by the heat generated when the organic pigment is decomposed. Thus, it becomes possible to obtain a stable recording.

Furthermore, when the recording layer 3 contains an organic pigment whose decomposition reaction is a heat generating reaction, there is no need of increasing the light absorption of the organic pigment in order to store a sufficient heat in the recording layer 3 and it is possible to maintain a high reflection ratio of the organic pigment. By using an organic pigment having a high reflection factor, it is possible to realize a stable recording with a low-power laser beam.

The organic pigment generating a heat during decomposition may be a direct dye, an acid dye, a basic dye, a vat dye, an oil soluble dye, or a sulfide dye, and is not limited to particular dyes.

More specifically, the organic generating a heat at decomposition may be, as the direct dye, cyanine pigment, merocyamne pigment, triphenylmethane pigment, naphthoquinone pigment, xanthene pigment, squalium pigment, azulene pigment, methine pigment, pyrylium pigment, azo pigment, stilbene pigment, phthalocyariine pigment, or the like. Moreover, as the acid dye, there can be exemplified azo pigment, anthraquinone pigment, triphenylmethane pigment, xanthene pigment, azine pigment, or the like.

Moreover, as the basic dye, there can be exemplified cyanine pigment, azo pigment, azine pigment, triphenylmethane pigment, azulene pigment, methine pigment, pyrylium pigment, or the like. Moreover, the vat pigment may be azo pigment, anthraquinone pigment xanthene pigment, triphenylmethane mordant dye, acid mordant dye, anthraquinone pigment, indigoid pigment, or the like. Moreover, the oil soluble dye may be azo pigment, anthraquinone pigment, phthalocyanine pigment, triphenylmethane pigment, or the like.

Furthermore, in addition to the aforementioned pigments, there can also be exemplified dithiol metal complex. Each of the aforementioned organic pigments may be used solely or in combination with the others.

The recording layer 3 containing the aforementioned organic pigments generates a heat at decomposition of the organic pigments so as to compensate the insufficient power and can form a pit with a high sensitivity even when recording is performed with a low-power laser beam. Moreover, the organic pigment generating a heat at decomposition can have any light absorption ratio and accordingly, it is possible to use an organic pigment having a high reflection factor. Thus, it is possible to simultaneously obtain an appropriate reflection factor characteristic and an appropriate absorption ratio characteristic, enabling to realize a stable recording even with a low-power laser beam.

Among the aforementioned organic pigments, especially preferable those that generates a heat exceeding 500 J/g at decomposition. It is further preferable to use an organic pigment generating a heat exceeding 1000 J/g at decomposition. By using an organic pigment generating a high heat at decomposition, even when using a low-power laser beam, it is possible to obtain a sufficient heat required for recording and realize a stable recording.

Table 1 shows the quantity of heat generated at decomposition by organic pigments widely used.

**[Table 1]**

| Produced by | Trade name | Heat generated (J/g) |
|---|---|---|
| Nippon Kanko Shikiso Co., Ltd. | NK-3219 | 740 |
| | NK-3251 | -80 |
| | NK-3383 | 840 |
| | NK-3820 | -100 |
| | NK-4274 | 120 |
| | NK-4419 | 65 |
| | NK-4496 | 100 |
| | Q-02 | 450 |
| Fuji Photo Film Co., Ltd. | OM-57 | 760 |
| | OM-65 | 940 |
| | OM-69 | 970 |
| | OM-72 | 1000 |
| Nippon Kayaku Co., Ltd. | IRG-002 | 400 |
| | IRG-003 | 700 |
| | IRG-022 | 450 |
| | IRG-023 | 930 |
| | IR-820b | 24000 |

As is clear from Table 1, among the aforementioned organic pigments, the IR-820b (trade name) produced by Nippon Kayaku Co., Ltd. generates as high as 24000 J/g at decomposition and is especially preferable as an organic pigment to be used in the recording layer 3 of the optical disc according to the present invention. The IR-820b has a chemical formula (1) shown below.

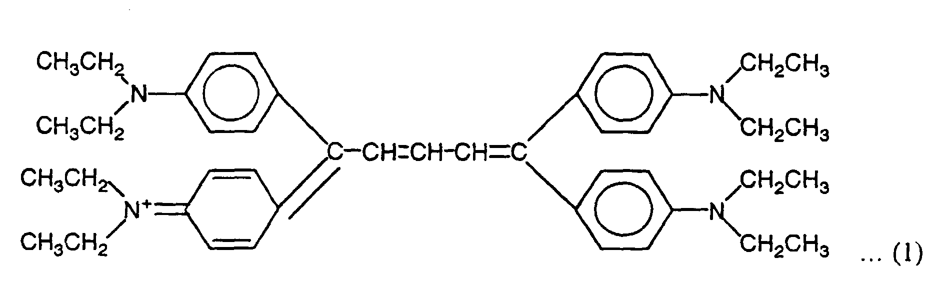

When an organic pigment generating such a high decomposition heat is used, as will be shown in examples later, it is possible to thermally control the recording sensitivity of the recording layer 3 by changing the amount of the organic pigment contained in the recording layer 3.

The optical disc 1 of the present embodiment as has been described above can be constructed in the same way as the conventional this type of optical discs except for that an organic pigment generating a heat at decomposition is used.

The present invention is not to be limited to the aforementioned embodiment but can be modified without departing the spirit of the present invention.

For example, in the aforementioned embodiment, explanation has been given for a case using an organic pigment generating a heat at decomposition. However, the present invention is not limited to this. It is also possible to use an organic pigment which generates a heat when reacting with other organic pigment contained in the recording layer 3.

### Examples

In order to confirm the effect of the present invention, an optical disc having the aforementioned configuration has been actually prepared for evaluating its recording characteristics.

### Example 1

Firstly, a substrate used is a disc-shaped substrate formed from polycarbonate and having a diameter of 200 mm. It should be noted that this substrate has a 20-mm hole at its center portion.

Next, a recording layer was formed on this substrate.

Firstly, as the organic pigment, a cyanine pigment having a chemical formula (A) shown below and the IR-820b (produced by Nippon Kayaku Co., Ltd.) having a chemical formula (1) shown below were solved in tetrafluoropropanol as a paint solvent so as to prepare a paint solution. It should be note that the compound (1) used in this example generates a very high heat exceeding 1000 J/g at decomposition.

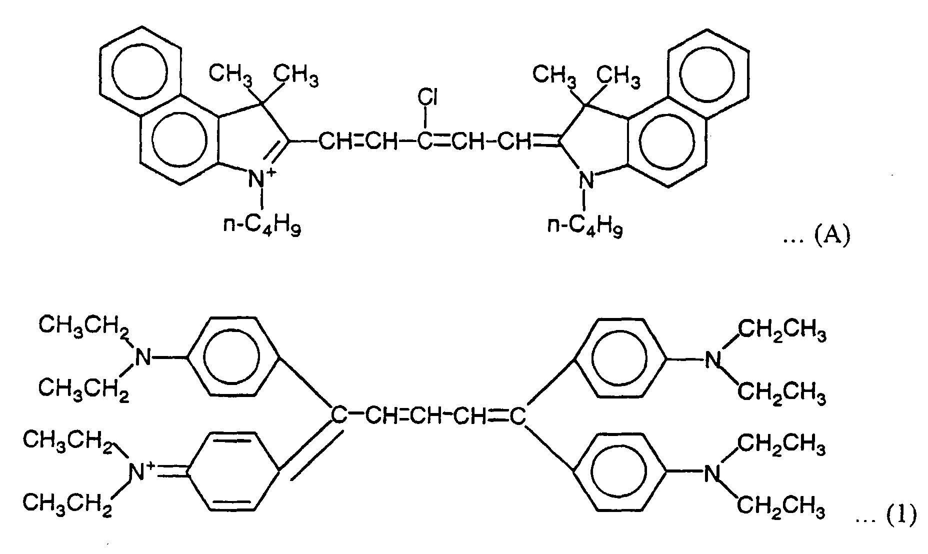

Next, this paint solution was applied onto the substrate by spin coat and dried so as to form a recording layer on the substrate.

Next, an Au film was formed by sputtering on this recording layer, so as to form a reflection layer. Furthermore, this reflection layer was covered by an ultraviolet ray hardening resin by spin coat. The ultraviolet ray hardening resin spin-coated was then subjected to ultraviolet rays so that the ultraviolet ray hardening resin was hardened so as to form a protection layer, thus completing an optical disc.

Optical discs were prepared while changing the content of the compound (1) in the organic pigment: 2 wt%, 3 wt%, 4 wt%, 6 wt%, and 10 wt%.

On the optical discs thus prepared, test signals were recording using a recording layer having a wavelength of 780 nm while changing the laser power. The asymmetry of pits formed was measured and the power at which the asymmetry was almost 0 was determined as an appropriate power. The recording and reproduction at the appropriate power were performed at a speed four times higher than the normal speed.

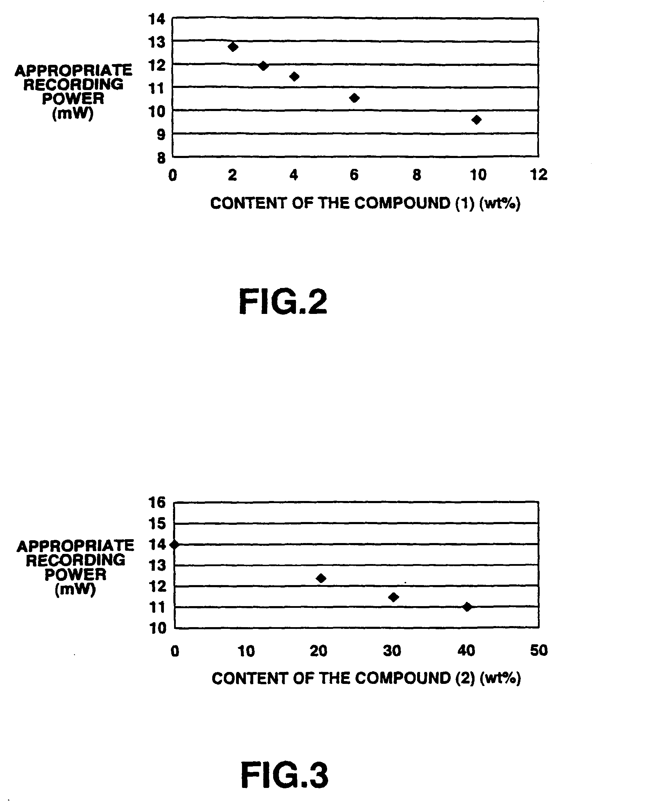

Fig. 2 shows relationships between the content of the compound (1) in the organic pigment of the recording layer and the corresponding appropriate recording power values.

As is clear from Fig. 2, as the content of the compound (1) (generating a heat at decomposition) in the recording layer increases, the appropriate recording power is lowered.

Thus, by using the organic pigment generating a heat at decomposition, even when a low-power laser beam is used, it is possible to obtain a sufficient heat quantity for recording and realize a stable recording. Furthermore, it has been confirmed that by changing the content of the organic pigment generating a heat at decomposition, it is possible to thermally control the recording sensitivity of the recording layer.

### Example 2

Firstly, a substrate used is a disc-shaped substrate formed from polycarbonate and having a diameter of 200 mm. It should be noted that this substrate has a 20-mm hole at its center portion.

Next, a recording layer was formed on this substrate.

Firstly, as the organic pigment, a cyanine pigment having a chemical formula (A) shown below and the OM-57 (produced by Fuji Photo Film Co., Ltd.) having a chemical formula (2) shown below were solved in tetrafluoropropanol as a paint solvent so as to prepare a paint solution. It should be note that the compound (2) used in this example generates a heat in the order of 500 J/g at decomposition.

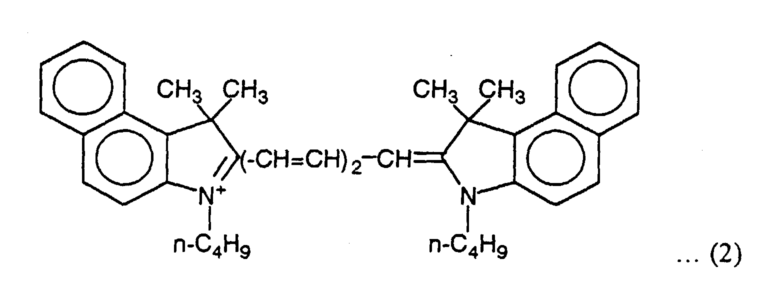

Next, this paint solution was applied onto the substrate by spin coat and dried so as to form a recording layer on the substrate.

Next, an Au film was formed by sputtering on this recording layer, so as to form a reflection layer. Furthermore, this reflection layer was covered by an ultraviolet ray hardening resin by spin coat. The ultraviolet ray hardening resin spin-coated was then subjected to ultraviolet rays so that the ultraviolet ray hardening resin was hardened so as to form a protection layer, thus completing an optical disc.

Optical discs were prepared while changing the content of the compound (2) in the organic pigment: 0 wt%, 20 wt%, 30 wt%, and 40 wt%.

On the optical discs thus prepared, test signals were recording using a recording layer having a wavelength of 780 nm while changing the laser power. The asymmetiy of pits formed was measured and the power at which the asymmetry was almost 0 was determined as an appropriate power. The recording and reproduction at the appropriate power were performed at a speed four times higher than the normal speed.

Fig. 3 shows relationships between the content of the compound (2) in the organic pigment of the recording layer and the corresponding appropriate recording power values.

The aforementioned compound (2) generates a small heat quantity compared to the compound (1) used in Example 1. In this case also, as is clear from Fig. 3, as the content of the compound (2) (generating a heat at decomposition) in the recording layer increases, the appropriate recording power is lowered.

Thus, regardless of the quantity of heat generated, by using the organic pigment generating a heat at decomposition, even when a low-power laser beam is used, it is possible to obtain a sufficient heat quantity for recording and realize a stable recording. Furthermore, it has been confirmed that by changing the content of the organic pigment generating a heat at decomposition, it is possible to thermally control the recording sensitivity of the recording layer.

According to the present invention, by using a compound generating a heat at reaction as an organic pigment constituting the recording layer, it is possible to realize an excellent optical recording medium capable of stable recording even when a low-power laser beam is used.

## Claims

1. An optical recording medium comprising a recording layer formed by an organic pigment film containing an organic pigment, a reflection layer, and a protection layer which are successively formed on a disc substrate, wherein said organic pigment film contains as said pigment a compound exhibiting a heat generating reaction.

2. An optical recording medium as claimed in claim 1, wherein said heat generating reaction is a decomposition reaction.

3. An optical recording medium as claimed in Claim 1, wherein said organic pigment is a mixture of a cyanine pigment and a pigment exhibiting said heat generating reaction.

4. An optical recording medium as claimed in Claim 1, wherein said organic pigment is decomposed and deformed by a laser beam application and a portion where said organic pigment is decomposed has a reflection factor different from the other portion of said recording layer and forms a pit in said recording layer.

5. An optical recording medium as claimed in Claim 1, wherein said reflection layer is formed from Au or Ag.

6. An optical recording medium as claimed in Claim 1, wherein said protection layer is formed from an ultraviolet ray hardening resin.

7. An optical recording medium as claimed in Claim 2, wherein said compound exhibiting a heat generating reaction is a compound expressed by formula (1):

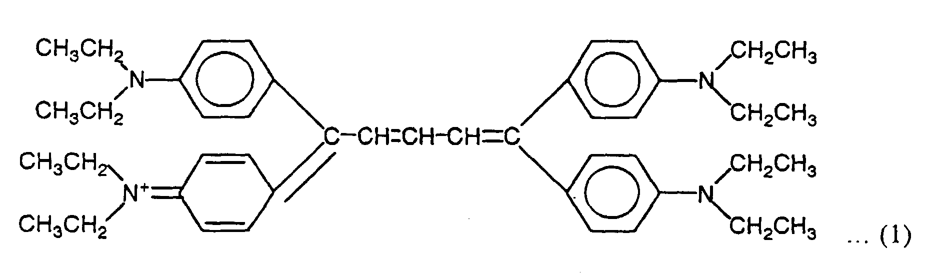

8. An optical recording medium as claimed in Claim 3, wherein said cyanine pigment is a compound expressed by formula (A):
